# EUROPEAN PATENT SPECIFICATION

(11) **EP 0 581 512 B1**
(45) Date of publication and mention of the grant of the patent: **16.10.1996**
(21) Application number: 93305705.1
(22) Date of filing: 20.07.1993
(51) Int. Cl.: B60P 7/04, B60J 7/10

(54) **Vehicle load covers**
Lastabdeckung für ein Fahrzeug
Couverture de chargement pour un véhicule

(30) Priority: 27.07.1992 GB 9215933; 12.01.1993 GB 9300507
(43) Date of publication of application: 02.02.1994
(73) Proprietor: T.T. BOUGHTON & SONS LIMITED, Amersham Bucks HP6 6PE (GB)
(72) Inventor: Boughton, Thomas Trafford, Amersham, Bucks. HP6 6PE (GB)
(74) Representative: Topley, Paul

(56) References cited:
- US-A- 4 516 802
- US-A- 4 874 196
- US-A- 5 031 955
- US-A- 5 058 956
- US-A- 5 129 698

## Description

The present invention relates to load coverings for vehicles, and is particularly concerned with a mechanically-deployed flexible cover for use in connection with open-topped goods vehicles or with goods vehicles carrying open-topped containers.

Various commodities are transported by road in open-topped vehicles or containers, and in order to prevent any loss of the load it is known to deploy a flexible covering sheet over the open upper face of the container when it is in place on a vehicle. In a conventional arrangement for so doing, a flexible cover is rolled onto a horizontally-extending roller situated between the forward end of the container and the rear of the driving compartment. The free edge of the rolled cover is attached to a horizontally-extending bar which is mounted to the free ends of a pair of swinging arms secured to the vehicle body at approximately the mid-point of the longitudinal extent of the load bed. By pivoting these arms to the rear of the vehicle, the flexible sheet is drawn off the roller and is deployed over the top of a container situated on the vehicle load bed.

A disadvantage of the equipment is that the pivoting arms must necessarily pass outboard of the container sides, and thus constitute an unacceptable widening of the vehicle's overall dimension.

US Patent 5,031,955 describes a vehicle load cover which is deployed rearwardly over the upper face of a vehicle body by a pair of swinging arms from a roll mounted over the vehicle cab, a tensioning bail being placed over the load cover at the forward end of the vehicle body.

US Patent 4,874,196 describes a similar arrangement to that of 5,031,955, but includes telescopically extendable swinging arms to enable the length of the arms to be varied.

These documents may be considered as representing the closest prior art.

US Patent 4,516,802 describes a load cover arrangement using swinging arms to deploy the load cover from a roll, and ropes attached to the edges of the load cover looped over hooks on the vehicle body to secure the cover in place.

US Patent 5,058,956 describes a load cover for a dumper truck which is drawn off a spring-loaded reel by a pair of swinging arms to deploy the cover over the load, and is retracted onto the reel by the resilience of the spring. Control interlocks prevent the body from being tipped to dump the load while the cover is deployed.

US Patent 5,129,698 describes a load cover deploying system of similar type including a ratchet device to control the unwinding of a load cover from a storage roll.

It is an object of the present invention to provide a vehicle load covering mechanism substantially narrower than conventional mechanisms, but simultaneously having the capability of providing adequate clearance between the mechanism and a container placed on the vehicle during the operation of deploying the cover.

According to the present invention, a mechanism for deploying a cover over the upper face of the vehicle body or of a container situated on the load bed comprises a pair of swinging arms pivotally mounted at one of their respective ends to the vehicle body so as to allow the arms to rotate about a horizontal transverse axis situated in the mid-region of the longitudinal extent of the vehicle load bed, the respective other ends of the arms being joined by a generally horizontally extending bar aligned in the transverse direction with relation to the vehicle, a flexible cover having a length dimension at least equal to the length of the vehicle load bed and a width dimension at least equal to the width of the vehicle load bed having one of its sides attached to the bar, and being retractable onto or into a load cover receiving means, the arrangement being such that pivoting movement of the swinging arms in a rearward direction will draw the load cover from the receiving means over the top of the vehicle body or of a container situated on the vehicle load bed, characterised in that the swinging arms are also mounted for translational movement in the transverse direction of the vehicle so as to alter the spacing between the swinging arms.

Preferably, the translational movement of the swinging arms is achieved by means of hydraulic or pneumatic piston and cylinder arrangements mounted at the ends of the swinging arms and acting between the respective swinging arms and the vehicle body at the lower ends of the swinging arms and between the respective swinging arms and the bar at their upper ends.

In an alternative arrangement, the connection between the transverse bar and the upper ends of the swinging arms may include threaded elements rotatable by means of electric or hydraulic motors to vary the transverse spacing between the upper ends of the swinging arms. In a further alternative embodiment, the bar joining the upper ends of the swinging arms may be made telescopic, so that its length may be varied to adjust the spacing between the swinging arms.

Two embodiments of the invention will now be described in detail with reference to the accompanying drawings, in which:
Figure 1 is a schematic side view of a vehicle fitted with a flexible load cover deploying mechanism;
Figure 2 is a schematic sectional view taken in the plane Z-Z of Figure 1; and
Figure 3 is a view similar to Figure 1 of an alternative embodiment of the device.

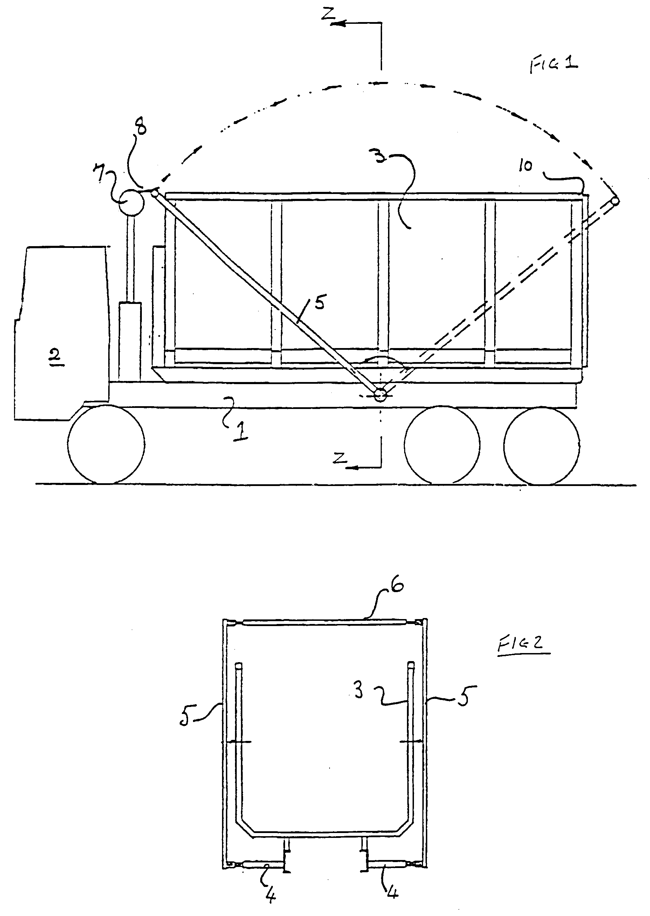

Referring now to Figure 1, there is seen a vehicle having a chassis 1 and a driving compartment 2 situated at its forward end. The rear of the chassis 1 supports a load bed on which is seen a container 3. The vehicle preferably has a conventional mechanism for picking up and setting down the container 3 by means of a pivoting loading arm (not shown). It should be understood that the vehicle may be a fixed-body type, in which case the container 3 is replaced by an equivalent open-topped body structure, possibly with tipping capability.

Extending transversely outwardly from the main chassis members at a point intermediate the longitudinal extent of the load bed are a pair of coaxial pivot shafts 4. A pair of swinging arms 5 are pivotally mounted to the respective pivot shafts 4, and are joined at their upper ends by a transverse bar 6.

Pivot shafts 4 are telescopic, and may be formed by piston and cylinder assemblies with the cylinder fixed to the vehicle chassis and the piston fixed to the swinging arm. The transverse bar 6 may likewise include two piston and cylinder assemblies with their cylinders fixed to a central part of the transverse bar 6 and their pistons fixed to the swinging arms, or vice versa In the retracted condition of the pivot shafts 4 and transverse bar 6, the swinging arms 5 are positioned closely adjacent the sides of the container 3. When the pivot shafts 4 and transverse bar 6 are extended, the swinging arms 5 are spaced from the sides of the container 3 by a distance of for example 150 mm. Clearly, the change in length of the transverse bar 6 between its retracted and extended conditions is equal to the sum of the changes in length of the pivot shafts 4 between their respective retracted and extended conditions.

Mounted to the vehicle chassis between the driving compartment 2 and the forward end of the container 3 is a load cover receiving means 7 which in the embodiment shown comprises a transversely extending shaft onto which a flexible load cover sheet 8 is rolled. To attach the load cover sheet 8 to the shaft, the shaft may be formed with an undercut channel groove along its length to accept a thickened edge portion of the load cover sheet. such a thickened edge portion may be formed by a boltrope attached to the edge of the load cover sheet. The transversely extending edge of the cover sheet 8 remote from the load cover receiving means 7 is attached to the central part of the transverse bar 6, preferably by means of a second boltrope received in an undercut channel groove in the central part of transverse bar 6. Clearly, however, any other fixing means may be used, such as a clamping bar extending along the edge of the load cover sheet and fixed to the transverse bar to clamp the load cover sheet therebetween, or a series of discreet fixings such as flanged bolts or screws.

Advantageously, the load cover sheet 8 is attached to the transverse bar 6 and to the ends of the swinging arms 5 so that when the swinging arms 5 are moved apart to their greatest separation the load cover sheet 8 is taut. The load cover sheet 8 may be slightly elastic membrane, or a mesh of elastic filaments.

The load cover receiving means 7 may be mounted to the chassis 1 in such a way that the vertical height of the load cover receiving means above the chassis 1 can be varied. Advantageously, the load cover receiving means 7 can be positioned so as to be adjacent the forward upper edge of the vehicle body or of the container 3 when the container 3 is positioned on the vehicle load bed.

The procedure for loading a container and covering the container will now be described with reference to the Figures.

In the unloaded state, the pivot shafts 4 and transverse bar 6 are in their retracted conditions, and the swinging arms 5 are swung forward, with the load cover sheet 8 coiled on, or otherwise stowed in or on, the load cover receiving means 7.

Prior to loading the container onto the vehicle, the pivot shafts 4 and transverse bar 6 are extended to provide additional clearance in the transverse direction between the swinging arms 5, and to stretch the load cover 8 taut in the transverse direction. The container is loaded onto the vehicle using the vehicle's load handling equipment in a conventional manner.

In order to deploy the flexible load cover over the top of the container, the swinging arms 5, actuated preferably either hydraulically or by pneumatic means, spring means, or electrically driven means, are pivoted about the pivot shafts 4 so that the transverse bar 6 moves rearwardly over the container to a position beyond the rear upper edge 10 of the container.

The flexible load cover 8, which is attached to the transverse bar 6, is during this time drawn across the open upper surface of the container, effectively sealing it. The pivot shafts 4 and transverse bar 6 are then retracted to bring the swinging arms 5 into close engagement with the sides of the container 3. The vehicle is now ready to be driven to its unloading station.

At the unloading station, the pivot shafts 4 and transverse bar 6 are again extended to provide clearance between the swinging arms 5 and the sides of the container 3, and by retracting the flexible load cover sheet, the swinging arms 5 are drawn forward again as the flexible load cover sheet 8 is wound onto the load cover sheet receiving means 7. When the swinging arms 5 have reached their forwardmost position, the container can then be unloaded from the vehicle in the conventional manner. If the vehicle is to be driven to a new location prior to reloading a fresh container, the pivot shafts 4 and transverse bar 6 are then retracted so as to decrease the spacing between the swinging arms 5 and thus decrease the overall width of the vehicle to an acceptable dimension.

If a further container is to be loaded immediately, the pivot shafts 4 and transverse bar 6 are left in their extended conditions until such time as the new container is loaded. The pivot shafts and transverse bar can then be retracted, if the load cover is not to be deployed. If the load cover is to be deployed, then the swinging arms 5 are pivoted rearwardly to draw the flexible load cover sheet 8 over the upper face of the newly loaded container, as described before.

As an alternative to the telescopic pivot shafts 4 and transverse bar 6, the pivot shafts may comprise a fixed stub shaft attached to the vehicle chassis, and a movable shaft fixed to the swinging arm 5, to permit relative translational movement in the transverse direction of the vehicle as between the swinging arm 5 and the vehicle chassis 1. Extension and retraction of the pivot shafts 4 and transverse bar 6 may be effected by hydraulic or pneumatic means, or by means of threaded shafts and ball screws.

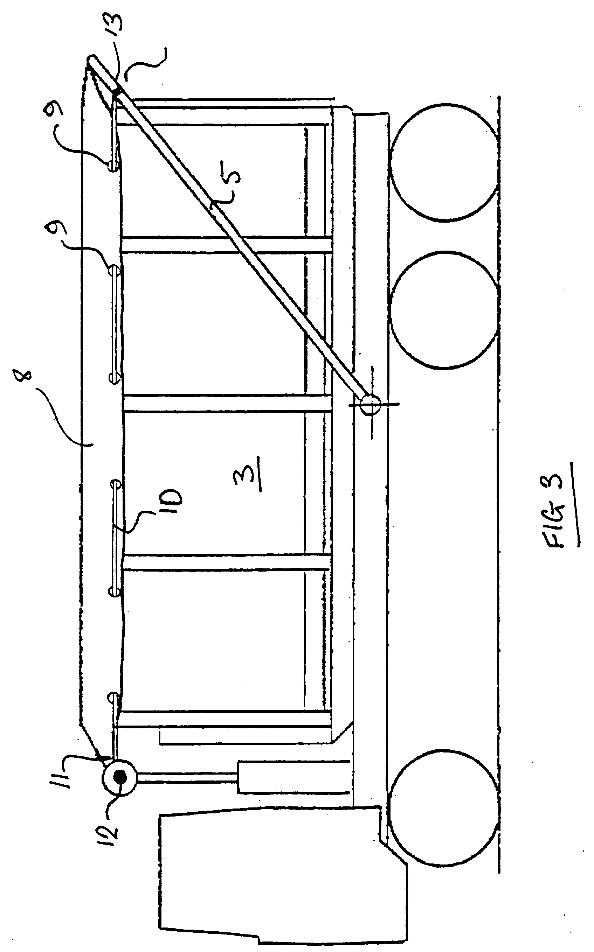

In an advantageous development of the invention illustrated in Figure 3, the side edges of the vehicle load cover may be brought into closer engagement with the top of the load by providing a pair of tension elements running along the sides of the load cover, preferably extending from the swinging arms 5 to the sheet receiving means 7. The tension elements may be ropes or cables, or may be elastic or have elasticated portions incorporated therein. The tension elements may pass through sleeves formed at the edges of the load cover, or may be attached thereto along their lengths at various points.

In an advantageous embodiment, the transverse dimension of the load cover is greater than the width of the top of the container or vehicle body, to provide an overhang extending down the side of the container or vehicle body. The edges of the load cover are each provided with a series of eyelets through which a rope is passed in alternating directions relative to the plane of the load cover. The rope ends are respectively attached to the shaft on which the load cover is rolled up, and to the swinging arms 5 at points spaced from the free ends thereof. The lengths of the ropes are so arranged that when the swinging arms 5 are pivoted to their rearmost positions, the ropes lie below the top to the container and pull the load cover sheet into tight engagement with the container top.

Figure 3 shows, in side elevation, the modified load cover device. As before, the vehicle has the swinging arms 5, pivot shafts 4 and transverse bar 6 to deploy the load cover sheet 8 from the receiving means 7 over the open top of the container 3.

Along the side edges of the cover sheet 8 are formed two series of eyelets or openings 9, through which ropes 10 are threaded.

At their forward ends 11 the ropes 10 are attached to a spindle 12 on which the load cover sheet is wound. The rear ends 13 of the ropes 10 are fixed to the swinging arms 5 at points spaced from their upper ends, so that when the swinging arms are in their rearmost position, the ropes 10 extend alongside the container 3 against its sidewalls but spaced from its upper edges.

Advantageously the ropes 10 may be wholly or partly of elastic material, and may have their lengths adjusted so that they are under tension in the deployed position and thus hold the cover sheet 8 taut. The ropes 10 may be wholly formed of elastic material, or may have elasticated parts situated either intermediate their lengths or at their ends.

The ropes 10 seen in Figure 3 are attached to the load cover sheet 8 by passing through eyelets 9. Alternatively, the ropes 10 could pass through sleeves formed at the cover sheet edges by folding and sewing the cover sheet material. The ropes 10 may be movable in the sleeves, or may be tightly held therein.

In a further alternative embodiment, not illustrated, the tension elements may simply be reinforced edge portions of the load cover sheet, with attachments made between points on the swinging arms 5 spaced from transverse bar 6 and points on the reinforced longitudinal edges of the sheet at points spaced from transverse bar 6, to impart a downward tension of the sheet edges when the load cover is deployed. Such attachments will advantageously be elastic.

While the load cover 8 has been described as a sheet, it is clearly possible to substitute a netting material for the sheet, and to thread ropes 10 through the holes in the mesh of the net. Likewise, the embodiment described in relation to Figures 1 and 2 may use a net rather than a sheet.

## Claims

1. A mechanism for deploying a cover (8) over the upper face (10) of the vehicle body (3) or of a container situated on the load bed (1) of a vehicle, comprising a pair of swinging arms (5) pivotally mounted at one of their respective ends to the vehicle body so as to allow the arms to rotate about a horizontal transverse axis situated in the mid-region of the longitudinal extent of the vehicle load bed, the respective other ends of the arms 95) being joined by a generally horizontally extending bar (6) aligned in the transverse direction with relation to the vehicle, a flexible cover (8) having a length dimension at least equal to the length of the vehicle load bed and a width dimension at least equal to the width of the vehicle load bed having one of its sides attached to the bar (6), and being retractable onto or into a load cover receiving means (7), the arrangement being such that pivoting movement of the swinging arms (5) in a rearward direction will draw the load cover (8) from the receiving means (7) over the top of the vehicle body (3) or of a container (3) situated on the vehicle load bed (1), characterised in that the swinging arms are also mounted for translational movement in the transverse direction of the vehicle so as to alter the spacing between the swinging arms (5).

2. A mechanism according to claim 1, characterised in that the translational movement of the swinging arms (5) is achieved by means of hydraulic or pneumatic piston and cylinder arrangements mounted at the ends of the swinging arms and acting between the respective swinging arms and the vehicle body at the lower ends of the swinging arms and between the respective swinging arms and the bar at their upper ends.

3. A mechanism according to claim 1, characterised in that the connection between the transverse bar (6) and the upper ends of the swinging arms (5) includes threaded elements rotatable by means of electric or hydraulic motors to vary the transverse spacing between the upper ends of the swinging arms (5).

4. A mechanism according to claim 1, characterised in that the bar (6) joining the upper ends of the swinging arms is telescopic, so that its length may be varied to adjust the spacing between the swinging arms (5).

5. A mechanism according to any preceding claim, characterised in that the longitudinal side edges of the vehicle load cover are be brought into closer engagement with the top of the vehicle body or of a container situated on the vehicle load bed by providing a pair of tension elements (10) running along the sides of the load cover.

6. A mechanism according to claim 5, characterised in that the tension elements extend from the swinging arms (5) to the load cover receiving means (7).

7. A mechanism according to claim 5 or claim 6, characterised in that the tension elements (10) are ropes or cables.

8. A mechanism according to claim 5 or claim 6, characterised in that the tension elements (10) are elastic or have elasticated portions incorporated therein.

9. A mechanism according to claim 5 or claim 6, characterised in that the tension elements (10) pass through sleeves formed at the edges of the load cover (8).

10. A mechanism according to claim 5 or claim 6, characterised in that the tension elements (10) are attached to the edges of the load cover (8) at various points along their lengths.

11. A mechanism according to claim 5 or claim 6, characterised in that the tension elements (10) each pass through a series of eyelets (9) formed at the respective longitudinal edges of the load cover (8).

## Patentansprüche

1. Mechanismus zum Entfalten einer Abdeckung (8) über der Oberseite (10) des Fahrzeugkörpers (3) oder des auf der Ladefläche (1) eines Fahrzeugs befindlichen Containers, bestehend aus einem Paar Schwenkarme (5), die jeweils an einem ihrer Enden schwenkbar mit dem Fahrzeugkörper verbunden sind, so daß die Arme um eine horizontal verlaufende Querachse im Mittelabschnitt der Längsausdehnung der Fahrzeugladefläche geschwenkt werden können, wobei die jeweils anderen Enden der Arme (5) durch eine im wesentlichen horizontal verlaufende Schiene (6) miteinander verbunden sind, welche bezüglich des Fahrzeugs ebenfalls in Querrichtung verläuft; aus einer flexiblen Abdeckung (8), deren Länge mindestens der Länge der Ladefläche und deren Breite mindestens der Breite der Ladefläche entspricht und deren eine Seite mit der Schiene (6) verbunden ist und die auf oder in eine Vorrichtung zur Aufnahme der Ladungsabdeckung (7) zurückgezogen werden kann, wobei die Anordnung so gestaltet ist, daß durch die nach hinten gerichtete Schwenkbewegung der Schwenkarme (5) die Ladungsabdeckung (8) aus der Aufnahmevorrichtung (7) über die Oberseite des Fahrzeugkörpers (3) oder des auf der Fahrzeugladefläche (1) befindlichen Containers (3) gezogen wird, dadurch gekennzeichnet, daß die Befestigung der Schwenkarme außerdem eine Translationsbewegung in Querrichtung zum Fahrzeug ermöglicht, so daß der Abstand zwischen den Schwenkarmen (5) verändert werden kann.

2. Mechanismus entsprechend Anspruch 1, dadurch gekennzeichnet daß die Translationsbewegung der Schwenkarme (5) durch Vorrichtungen erreicht wird, bei denen eine Anordnung aus hydraulischem bzw. pneumatischem Kolben und Zylinder verwendet wird, wobei diese Vorrichtungen an den Enden der Schwenkarme befestigt sind und am unteren Ende der Schwenkarme zwischen den jeweiligen Schwenkarmen und dem Fahrzeugkörper und am oberen Ende der Schwenkarme zwischen den jeweiligen Schwenkarmen und der Schiene eingesetzt werden.

3. Mechanismus entsprechend Anspruch 1, dadurch gekennzeichnet, daß die Verbindung zwischen der Querschiene (6) und den oberen Enden der Schwenkarme (5) mit Gewinden versehene Elemente aufweist, die mit Hilfe von elektrischen oder hydraulischen Motoren angetrieben werden, um den Querabstand zwischen den oberen Enden der Schwenkarme (5) zu verändern.

4. Mechanismus entsprechend Anspruch 1, dadurch gekennzeichnet, daß die mit den oberen Enden der Schwingarme verbundene Schiene (6) teleskopartig konstruiert ist, so daß ihre Länge verändert und an den Abstand zwischen den Schwenkarmen (5) angepaßt werden kann.

5. Mechanismus entsprechend allen vorherigen Ansprüchen, dadurch gekennzeichnet, daß die Längsseitenränder der Fahrzeugladungsabdeckung in engeren Kontakt mit der Oberseite des Fahrzeugkörpers oder eines auf der Ladefläche des Fahrzeugs befindlichen Containers gebracht werden, indem ein Paar Spannelemente (10) bereitgestellt werden, die entlang den Seiten der Ladungsabdeckung verlaufen.

6. Mechanismus entsprechend Anspruch 5, dadurch gekennzeichnet, daß die Spannelemente von den Schwenkarmen (5) bis zur Vorrichtung zur Aufnahme der Ladungsabdeckung (7) verlaufen.

7. Mechanismus entsprechend Anspruch 5 oder Anspruch 6, dadurch gekennzeichnet, daß es sich bei den Spannelementen (10) um Seile oder Kabel handelt.

8. Mechanismus entsprechend Anspruch 5 oder Anspruch 6, dadurch gekennzeichnet, daß die Spannelemente (10) insgesamt elastisch sind oder elastische Teilabschnitte aufweisen.

9. Mechanismus entsprechend Anspruch 5 oder Anspruch 6, dadurch gekennzeichnet, daß die Spannelemente (10) durch an den Rändern der Ladungsabdeckung (8) befindliche Schlaufen geführt werden.

10. Mechanismus entsprechend Anspruch 5 oder Anspruch 6, dadurch gekennzeichnet, daß die Spannelemente (10) mit den Rändern der Ladungsabdeckung (8) an mehreren Stellen auf deren gesamter Länge verbunden sind.

11. Mechanismus entsprechend Anspruch 5 oder Anspruch 6, dadurch gekennzeichnet, daß jedes der Spannelemente (10) durch eine Reihe von Ösen (9) geführt wird, die sich an den jeweiligen Längsseitenrändern der Ladungsabdeckung (8) befinden.

## Revendications

1. Mécanisme pour déployer un organe de recouvrement (8) sur la face supérieure (10) de la carrosserie d'un véhicule (3) ou d'un conteneur situé sur la plate forme de charge (1) d'un véhicule, comprenant une paire de bras oscillants (5) montés de façon à pouvoir pivoter à l'une de leurs extrémités respectives sur le corps du véhicule, de façon à permettre aux bras de tourner autour d'un axe transversal horizontal situé dans la région médiane de l'étendue longitudinale de la plate forme de charge du véhicule, les autres extrémités respectives des bras (95) étant réunies par une barre s'étendant globalement horizontalement (6), alignée dans la direction transversale par rapport au véhicule, un organe de recouvrement flexible (8) ayant une dimension de longueur au moins égale à la longueur de la plate forme de charge du véhicule et une dimension de largeur au moins égale à la largeur de la plate forme de charge du véhicule, ayant l'un de ses cotés fixé à la barre (6) et pouvant être rétracté sur ou dans des moyens de réception d'organe de recouvrement de la charge (7), l'agencement étant tel que le mouvement de pivotement des bras oscillants (5) dans la direction vers l'arrière tire l'organe de recouvrement de la charge (8) depuis les moyens de réception (7) au-dessus du dessus de la carrosserie de véhicule (3) ou d'un conteneur (3) situé sur la plate forme de charge (1) du véhicule, caractérisé en ce que les bras oscillants sont également montés pour effectuer un mouvement de translation dans la direction transversale du véhicule de façon à modifier l'espacement entre les bras oscillants (5).

2. Mécanisme selon la revendication 1, caractérisé en ce que le mouvement de translation des bras oscillants (5) est effectué au moyen d'agencements de piston et de cylindre hydrauliques ou pneumatiques montés aux extrémités des bras oscillants et agissant entre les bras oscillants respectifs et la carrosserie de véhicule aux extrémités inférieures des bras oscillants et entre les bras oscillants respectifs et la barre à leurs extrémités supérieures.

3. Mécanisme selon la revendication 1, caractérisé en ce que le raccordement entre la barre transversale (6) et les extrémités supérieures des bras oscillants (5) comprend des éléments filetés pouvant tourner au moyen de moteurs électriques ou hydrauliques afin de faire varier l'espacement transversal entre les extrémités supérieures des bras oscillants (5).

4. Mécanisme selon la revendication 1, caractérisé en ce que la barre (6) réunissant les extrémités supérieures des bras oscillants est télescopique, ce qui fait que l'on peut faire varier sa longueur afin d'ajuster l'espacement entre les bras oscillants (5).

5. Mécanisme selon l'une quelconque des revendications précédentes, caractérisé en ce que les bords latéraux longitudinaux de l'organe de recouvrement de la charge du véhicule sont mis en prise plus étroite avec le dessus de la carrosserie de véhicule ou d'un conteneur situé sur la plate forme de charge du véhicule grâce à la présence d'une paire d'éléments de tension (10) disposés le long des côtés de l'organe de recouvrement de la charge.

6. Mécanisme selon la revendication 5, caractérisé en ce que les éléments de tension s'étendent des bras oscillants (5) aux moyens de réception de l'organe de recouvrement de la charge (7).

7. Mécanisme selon la revendication 5 ou la revendication 6, caractérisé en ce que les éléments de tension (10) sont des cordes ou des câbles.

8. Mécanisme selon la revendication 5 ou la revendication 6, caractérisé en ce que les éléments de tension (10) sont élastiques ou ont des parties élastiques qui leur sont incorporées.

9. Mécanisme selon la revendication 5 ou la revendication 6, caractérisé en ce que les éléments de tension (10) traversent des manchons formés sur les bords de l'organe de recouvrement de la charge (8).

10. Mécanisme selon la revendication 5 ou la revendication 6, caractérisé en ce que les éléments de tension (10) sont fixés aux bords de l'organe de recouvrement de la charge (8) en différents points le long de leurs longueurs.

11. Mécanisme selon la revendication 5 ou la revendication 6, caractérisé en ce que les éléments de tension (10) traversent chacun une série d'oeillets (9) formés sur les bords longitudinaux respectifs de l'organe de recouvrement de la charge (8).
